# EUROPÄISCHE PATENTSCHRIFT

(11) **EP 2 537 761 B1**
(45) Veröffentlichungstag und Bekanntmachung des Hinweises auf die Patenterteilung: **04.06.2014**
(21) Anmeldenummer: 12004411.0
(22) Anmeldetag: 12.06.2012
(51) Int. Cl.: B65B 7/16, B65B 51/14

(54) **Verfahren und Siegelstation zum Versiegeln von Verpackungen**
Method and sealing station for sealing packages
Procédé et poste de scellage pour le scellement d'emballages

(30) Priorität: 24.06.2011 DE 102011105513
(43) Veröffentlichungstag der Anmeldung: 26.12.2012
(73) Patentinhaber: Multivac Sepp Haggenmüller GmbH & Co. KG, 87787 Wolfertschwenden (DE)
(72) Erfinder: Ickert, Lars, 87437 Kempten (DE); Mader, Andreas, 87463 Dietmannsried (DE); Langer, Bernhard, 87730 Bad Grönenbach (DE)
(74) Vertreter: Grünecker, Kinkeldey, Stockmair & Schwanhäusser

(56) Entgegenhaltungen:
- GB-A- 1 083 578
- US-A1- 2001 022 065
- US-A1- 2004 098 947

## Beschreibung

Die Erfindung bezieht sich auf ein Verfahren zum Versiegeln von mindestens einer Verpackung gemäß dem Oberbegriff des Anspruchs 1 sowie auf eine Siegelstation für eine Verpackungsmaschine.

Entsprechende Verfahren und Siegelstationen sind beispielsweise aus der DE 10 2008 023 319 A1 oder der DE 10 2008 052 423 A1 bekannt. Dabei wird üblicherweise zwischen einem Siegelwerkzeugoberteil und einem Siegelwerkzeugunterteil eine hermetisch geschlossene Kammer gebildet, um die zu versiegelnden Verpackungen evakuieren und/oder begasen zu können. Eine die Verpackungen tragende Schalenaufnahme kann angehoben werden, um die Schalen und eine auf diesen Schalen aufliegende Deckelfolie gegen ein Siegelwerkzeug zu fahren. Durch die Wärme der Siegelplatte und den beim Andrücken entstehenden Druck des Siegelwerkzeugoberteils auf die Schalenaufnahme wird die Deckelfolie auf die Schalen aufgesiegelt.

Die US 2004/0098947 A1 zeigt eine Siegelvorrichtung mit einem motorischen Antrieb, um eine Schalenaufnahme zusammen mit einer mit Produkt gefüllten Schale gegen ein Siegelwerkzeugoberteil anzuheben.

Aufgabe der vorliegenden Erfindung ist es, die bisherigen Verfahren und Siegelstationen mit konstruktiv möglichst einfachen Mitteln hinsichtlich eines schnelleren Siegelprozesses zu verbessern, während gleichzeitig die Qualität einer beim Siegeln erzeugten Siegelnaht zumindest erhalten bleibt oder sogar noch verbessert wird.

Diese Aufgabe wird gelöst durch ein Verfahren mit den Merkmalen des Anspruchs 1 bzw. durch eine Siegelstation mit den Merkmalen des Anspruchs 7. Vorteilhafte Weiterbildungen der Erfindung sind in den Unteransprüchen angegeben.

Das erfindungsgemäße Verfahren sieht vor, dass die Hubbewegung des Siegelwerkzeugunterteils in einer einheitlichen, ununterbrochenen Bewegung von einer abgesenkten, die Verpackung aufnehmenden Stellung über eine Zwischenstellung, in der ein Einklemmen der Verpackung zwischen dem Siegelwerkzeugunterteil und der Siegelplatte erfolgt, bis zu einer oberen Endstellung erfolgt, in der das Siegelwerkzeugunterteil und die Siegelplatte gemeinsam mittels des Antriebs gegenüber der Zwischenstellung angehoben sind. Indem diese Hubbewegung in einer einheitlichen, ununterbrochenen Bewegung durchgeführt wird, entfällt das bisher immer vorhandene Anhalten der Verpackung beim Evakuieren und/oder Begasen der Verpackung. Gleichzeitig entfällt damit auch das zum Anhalten erforderliche Abbremsen und das erneute Beschleunigen der Verpackung. Daraus ergibt sich zum Einen ein Zeitgewinn, d.h. eine verkürzte Zeit des Siegelprozesses, zum Anderen eine Energieeinsparung, da die Energie zum Abbremsen und Beschleunigen entfällt.

Dennoch kann bei der Erfindung eine ausreichend lange Siegelzeit und eine entsprechende Qualität der Siegelnaht gewährleistet werden. Dies geschieht dadurch, dass das Siegelwerkzeugunterteil und die Siegelplatte von der Zwischenstellung in die höher liegende Endstellung gleichsam als "Paket" bewegt werden und während dessen die Verpackung zwischen sich aufnehmen. Auf diese Weise steht die gesamte Zeit der Bewegung von der Zwischenstellung bis zur Endstellung zum Siegeln zu Verfügung - gegebenenfalls auch die Zeit einer umgekehrten Bewegung von der Endstellung zurück in die Zwischenstellung. Darüber hinaus könnte die Siegelzeit bei Bedarf beliebig durch eine geeignete Haltezeit in der Endstellung verlängert werden.

Besonders vorteilhaft bei der Erfindung ist vor allem, dass die Kraft des Hubwerks bzw. des Antriebs für das Siegelwerkzeugunterteil zum Erzielen eines Anpressdrucks beim Siegeln ausgenutzt werden kann. Beispielsweise kann ein vergleichsweise kostengünstiger Drehstrommotor mit einer davon angetriebenen Spindel als Antrieb für das Siegelwerkzeugunterteil verwendet werden. Selbst wenn das Siegelwerkzeugunterteil in der Zwischenstellung gegen die Siegelplatte angeschlagen ist und diese anschließend mitnimmt, sorgt die vergleichsweise hohe Trägheit der Komponenten des Drehstrommotors und der Spindel und die Wucht des Aufpralls des Siegelwerkzeugunterteils auf die Siegelplatte für ausreichend hohe Siegelkräfte.

Vorzugsweise ist eine Dämpfungseinheit vorgesehen, die die Bewegung der Siegelplatte relativ zum Siegelwerkzeugoberteil dämpft oder abfedert. Diese Dämpfungseinheit sorgt für einen geeigneten Gegendruck der Siegelplatte an die zu versiegelnde Verpackung. Außerdem kann die Dämpfungseinheit die kinetische Energie des Siegelwerkzeugunterteils und der Siegelplatte aufnehmen und in potentielle Energie umwandeln. Nach dem Durchlaufen der Endstellung bzw. nach einer optionalen Haltezeit in der Endstellung kann die Dämpfungseinheit die gespeicherte potentielle Energie wieder in Form von kinetischer Energie an die Siegelplatte und das Siegelwerkzeugunterteil abgeben, diese beiden Komponenten also nach unten beschleunigen. Auf diese Weise wird die Energieeffizienz des erfindungsgemäßen Verfahrens weiter gesteigert.

Zweckmäßig ist es, wenn in der Endstellung von Siegelwerkzeugunterteil und Siegelplatte eine Härte oder eine Federkonstante der Dämpfungseinheit sprunghaft ansteigt. Dies könnte dadurch erreicht werden, dass die Dämpfungseinheit beispielsweise eine oder mehrere Schraubenfedern oder Tellerfedern aufweist, die beim Erreichen der Endstellung "auf Block laufen", d.h. dass die Abstände zwischen den Elementen der Feder auf Null verringert werden. Der sprunghafte Anstieg der Härte oder der Federkonstante der Dämpfungseinheit kann die Endstellung definieren und einen möglicherweise unerwünschten, unmittelbaren Kontakt zwischen der Siegelplatte und dem Siegelwerkzeugoberteil verhindern.

In einer günstigen Ausführungsvariante wird vor dem Erreichen der Zwischenstellung eine Deckelfolie zwischen dem Siegelwerkzeugunterteil unter einem Klemmrahmen eingeklemmt. Dies hat den Vorteil, dass die Position der Deckelfolie relativ zur Verpackungsschale stabilisiert wird. Der Klemmrahmen könnte dabei elastisch am Siegelwerkzeugoberteil aufgehängt sein.

Optional kann während der Hubbewegung des Siegelwerkzeugunterteils ein Durchtrennen der Deckelfolie erfolgen. Insbesondere könnte dies während der Bewegung von der Zwischenstellung zur Endstellung geschehen. Dies böte den Vorteil, dass die Verpackung am Ende des Siegelprozesses schon vereinzelt ist und nicht mehr über die Deckelfolie mit anderen Verpackungen zusammen hängt.

Wenn eine Möglichkeit eröffnet werden soll, die Siegeldauer zu verlängern, könnte eine Vorkehrung getroffen werden, um das Siegelwerkzeugunterteil und die Siegelplatte über eine gegebenenfalls variabel vorgebbare Haltezeit in der oberen Endstellung zu halten. Zu diesem Zweck könnte eine Verriegelung für das Siegelwerkzeugunterteil vorgesehen sein, beispielsweise ein lösbarer Rastmechanismus, der in der Endstellung in das Siegelwerkzeugunterteil eingreift. Zusätzlich oder alternativ könnte eine am Antrieb angreifende und temporär aktivierbare Bremse vorgesehen sein, um das Siegelwerkzeugunterteil temporär in seiner Endstellung zu halten.

Die Erfindung bezieht sich auch auf eine Siegelstation für eine Verpackungsmaschine, die zweckmäßig zum Ausführen eines Verfahrens der vorgeschriebenen Art konfiguriert sein kann. Diese Siegelstation umfasst ein eine Verpackung aufnehmendes Siegelwerkzeugunterteil, ein Siegelwerkzeugoberteil und eine Siegelplatte, wobei ein Antrieb zum Antreiben einer Hubbewegung des Siegelwerkzeugunterteils vorgesehen ist. Die Siegelplatte ist über eine Dämpfungseinheit am Siegelwerkzeugoberteil aufgehängt, um in einer Siegelstellung, die Verpackung zwischen sich und dem Siegelwerkzeugunterteil einklemmend, an der Hubbewegung des Siegelwerkzeugunterteils teilnehmen zu können. Wie bereits vorstehend geschildert, bietet dies den Vorteil, die gemeinsame Hubbewegung von Siegelwerkzeugunterteil und Siegelplatte zum Siegeln nutzen zu können. Die Dämpfungseinheilt bietet darüber hinaus den Vorteil, einen Gegendruck der Siegelplatte erzeugen zu können, die Bewegungsenergie des Siegelwerkzeugunterteils und der Siegelplatte speichern und wieder abgeben zu können und so die Energieeffizienz der Siegelstation zu verbessern.

Ebenfalls bereits vorstehend wurden die Vorteile erläutert, die sich daraus ergeben können, wenn die Dämpfungseinheit zu einem sprunghaften Ansteigen ihrer Härte oder ihrer Federkonstante in der Endstellung von Siegelwerkzeugunterteil und Siegelplatte konfiguriert ist.

Die Dämpfungseinheit kann ein Federelement, ein gummielastisches Element, einen Luftdämpfer, eine Luftfeder und/oder hydraulische Komponenten umfassen. Besonders einfach sind dabei passive Dämpfungselemente wie Federelemente oder gummielastische Elemente.

Wenn am Siegelwerkzeugoberteil ein relativ zu diesem beweglicher Klemmrahmen zum Einklemmen einer Deckelfolie zwischen dem Siegelwerkzeugunterteil und dem Klemmrahmen vorgesehen ist, kann auf diese Weise die Position der Deckelfolie stabilisiert und so die Qualität der Siegelung verbessert werden.

Der Klemmrahmen könnte insbesondere elastisch am Siegelwerkzeugoberteil gelagert sein, um so bei der Hubbewegung des Siegelwerkzeugunterteils mitgenommen werden und gleichzeitig konstante Klemmkräfte ausüben zu können.

Wenn eine Führung zum Führen der Bewegung der Siegelplatte relativ zum Siegelwerkzeugoberteil vorgesehen ist, wird die Bewegung der Siegelplatte präziser definiert. Insbesondere kann dadurch ein Verkanten oder eine seitliche Verlagerung der Siegelplatte sicher verhindert werden.

In einer weiteren Verbesserung der Siegelstation ist ein Schneidmesser zum Durchtrennen einer Siegelfolie am Siegelwerkzeugunterteil oder am Siegelwerkzeugoberteil befestigt. Diese Befestigung könnte insbesondere starr sein. Dies hätte den Vorteil, dass ein eigener Aktor für das Schneidmesser entfallen kann.

Vorzugsweise ist des Weiteren ein Anschlag zum Festlegen der Endstellung der Siegelplatte vorgesehen. Wenn die Siegelplatte gegen diesen Anschlag anläuft, hat sie ihre Endstellung erreicht. Dieser Anschlag kann am Siegelwerkzeugoberteil befestigt sein.

Um zu ermöglichen, dass sich das Siegelwerkzeugunterteil und die Siegelplatte über eine gegebenenfalls in ihrer Dauer variabel einstellbare Haltezeit in der Endstellung befinden können, können eine Verriegelung zum Verriegeln des Siegelwerkzeugunterteils in seiner Endstellung und/oder eine am Antrieb angreifende Bremse vorgesehen seien. Wie erläutert, kann es sich bei der Verriegelung beispielsweise um ein lösbares Rastelement handeln.

Es hat sich als günstig erwiesen, wenn als Antrieb oder Hubantrieb für das Siegelwerkzeugunterteil ein Motor mit einer integrierten Spindel vorgesehen ist. Damit ist im Kontext der Erfindung gemeint, dass der Motor die Spindel zu einer Hubbewegung antreibt, beispielsweise durch Drehen einer mit der Spindel in Eingriff stehenden Spindelmutter. Die Spindel kann dabei insbesondere den Motor durchdringen. Vorzugsweise ist als Motor dabei ein Asynchronmotor vorgesehen, z.B. ein Drehstrommotor. Diese Konfiguration hat insgesamt den Vorteil, dass vergleichsweise hohe Trägheitskräfte vorhanden sind, die indirekt zum Erzeugen eines hohen Siegeldrucks eingesetzt werden können.

Schließlich bezieht sich die Erfindung auch auf eine Verpackungsmaschine, die zum Durchführen eines Verfahrens der vorbeschriebenen Art konfiguriert ist und/oder eine Siegelstation der vorstehend beschriebenen Art aufweist.

Ein großer Vorteil der Erfindung liegt darin, dass es sich bei dem Antrieb für die Hubbewegung des Siegelwerkzeugunterteils um den einzigen Aktor oder Antrieb in der gesamten Siegelstation handeln kann. Es wäre nicht erforderlich, dass ein weiterer Antrieb zum Bewirken einer Schließbewegung von Siegelwerkzeugunterteil und Siegelwerkzeugoberteil vorgesehen ist, oder dass noch ein Antrieb zum Bewegen eines Schneidmessers vorgesehen ist.

Ein weiterer Vorteil der erfindungsgemäßen Siegelstation liegt darin, dass optional darauf verzichtet werden kann, eine hermetisch geschlossene Kammer zwischen Siegelwerkzeugunterteil und Siegelwerkzeugoberteil zu bilden. Auch ohne eine solche hermetisch geschlossene Kammer könnte die Deckelfolie beispielsweise mittels des Klemmrahmens sicher fixiert werden. Durch das Vermeiden des Erfordernisses für eine hermetisch geschlossene Kammer wird die erfindungsgemäße Siegelstation konstruktiv sehr einfach. Darüber hinaus wird der Prozess beschleunigt, da die Zeit zum Schließen einer hermetisch geschlossenen Kammer entfallen kann.

Im Folgenden wird ein vorteilhaftes Ausführungsbeispiel der Erfindung anhand einer Zeichnung näher erläutert. Im Einzelnen zeigen:
- Figur 1: eine perspektivische Ansicht einer erfindungsgemäßen Siegelstation bei einer Schalenverschließmaschine ("Traysealer"),
- Figur 2: eine schematische Darstellung der Komponenten der Siegelstation in einem Vertikalschnitt,
- Figur 3: eine schematische Darstellung der in Figur 2 gezeigten Komponenten kurz vor dem Erreichen der Zwischenstellung,
- Figur 4: eine schematische Darstellung der in Figur 2 und 3 gezeigten Komponenten beim Erreichen der Zwischenstellung,
- Figur 5: eine schematische Darstellung der Siegelstation beim Erreichen der Endposition,
- Figur 6: eine schematische Darstellung der Siegelstation bei wieder geöffneten Siegelwerkzeugen und
- Figur 7: die Darstellung des Siegeldrucks in einem Weg-Druck-Diagramm.

Gleiche Komponenten sind in den Figuren durchgängig mit gleichen Bezugszeichen versehen.

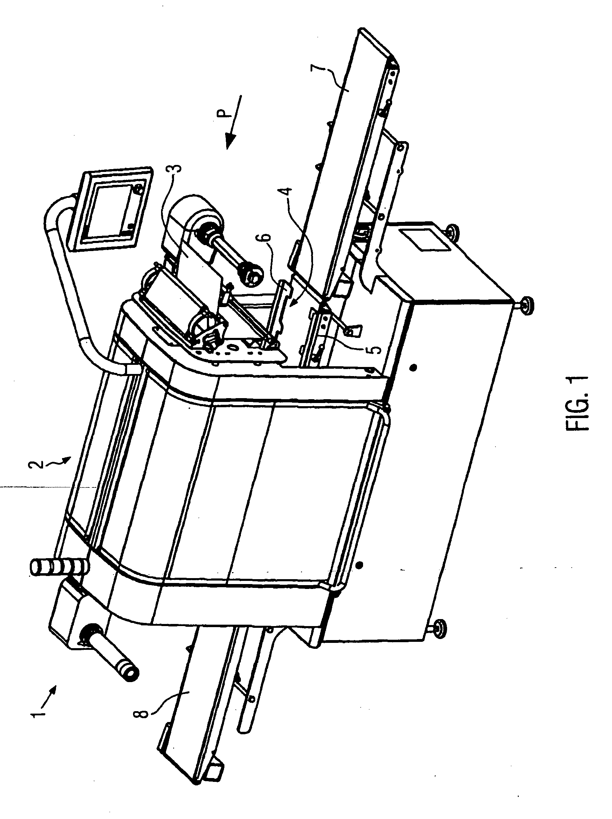

Figur 1 zeigt eine Schalenverschließmaschine 1 als Beispiel einer erfindungsgemäßen Verpackungsmaschine mit einer Siegelstation 2, in der nicht dargestellte Schalen mit einer Deckelfolie 3 versiegelt werden. Ein Greifersystem 4 mit einem ersten Greiferarm 5 und einem zweiten Greiferarm 6 ist dazu vorgesehen, Schalen in einer Produktionsrichtung P von einem Zuführförderer 7 in die Siegelstation 2 zu befördern. Nach dem Siegelvorgang in der Siegelstation 2 werden die versiegelten Schalen mittels des Greifersystems 4 aus der Siegelstation 2 heraus transportiert, auf einem Abführband 8 abgelegt und weiteren Prozessschritten zugeführt.

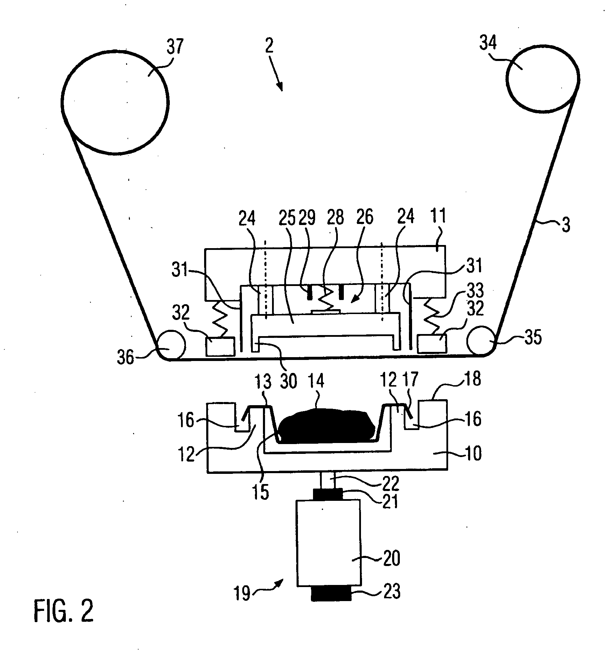

Figur 2 zeigt die Siegelstation in einem schematischen Vertikalschnitt senkrecht zur Produktionsrichtung P (siehe Figur 1). Die Siegelstation 2 verfügt über ein Siegelwerkzeugunterteil 10 und ein Siegelwerkzeugoberteil 11. Das Siegelwerkzeugunterteil 10 ist als Schalenaufnahme ausgestaltet. Zu diesem Zweck verfügt es über einen Schalentragerand 12, auf dem der Rand 13 einer mit einem Produkt 14 befüllten Schale 15 aufliegen kann. Der Schalentragerand 12 erstreckt sich rings um die Schale 15 und kann dabei ringförmig geschlossen sein oder auch einzelne Unterbrechungen aufweisen.

Außerhalb des Schalentragerandes 12 weist das Siegelwerkzeugunterteil 10 eine ebenfalls ringförmige Nut 16 auf, in die ein nach unten abgewinkeltes, äußeres Ende 17 des Schalenrandes 13 einfallen kann. Außerhalb dieser Nut 16 befindet sich wiederum ein gegenüber dem Schalentragerand 12 leicht erhöhter Absatz 18.

Unterhalb des Siegelwerkzeugunterteils 10 ist ein Antrieb 19 angeordnet, der als Hubantrieb dazu konfiguriert ist, eine Hubbewegung des Siegelwerkzeugunterteils 10 zu bewirken. Der Hubantrieb 19 verfügt über einen Motor 20, beispielsweise einen Drehstrommotor. Dieser ist dazu konfiguriert, eine Spindelmutter 21 zu rotieren, die mit einer Spindel 22 in Eingriff steht, die ihrerseits mit dem Siegelwerkzeugunterteil 10 fest verbunden ist. Eine durch den Motor 20 bewirkte Drehung der Spindelmutter 21 führt also zu einer Hubbewegung der Spindel 22, die ebenfalls als Hubbewegung auf das Siegelwerkzeugunterteil 10 übertragen wird. Eine optional vorgesehene Bremse 23 kann am Motor 20, an der Spindelmutter 21 oder an der Spindel 22 angreifen, um die Hubbewegung der Spindel 22 zu hemmen und das Siegelwerkzeugunterteil 10 auf diese Weise in einer bestimmten Position festzulegen.

Das Siegelwerkzeugoberteil 11 befindet sich oberhalb des Siegelwerkzeugunterteils 10. Von der Unterseite des Siegelwerkzeugoberteils 11 ragen Führungen 24 herab, von denen zwei in Figur 2 dargestellt sind. Auf den Führungen 24 sitzt eine Siegelplatte bzw. ein Siegelrahmen 25, der entlang der Führung in 24 in vertikaler Richtung bewegbar ist und zum Erreichen einer Siegeltemperatur beheizbar ist. Eine Dämpfungseinheit 26 ist dazu vorgesehen, die Bewegung der Siegelplatte 25 gegenüber dem Siegelwerkzeugoberteil 11 zu dämpfen. Im vorliegenden Ausführungsbeispiel umfasst die Dämpfungseinheit 26 eine Teller- oder Schraubenfeder 28. Ferner ist ein z.B. buchsenförmiger Anschlag 29 auf der Unterseite des Siegelwerkzeugoberteils 11 vorgesehen, um die Vertikalbewegung der Siegelplatte 25 relativ zum Siegelwerkzeugoberteil 11 zu begrenzen. Von den äußeren Seiten der Siegelplatte 25 stehen Siegelränder 30 nach unten ab. Die Kontur dieser Siegelränder 30 entspricht weitestgehend der Kontur des Schalentragerandes 12 des Siegelwerkzeugunterteils 10.

Ferner ist am Siegelwerkzeugoberteil ein Schneidmesser 31 starr befestigt. Es steht nach unten vom Siegelwerkzeugoberteil 11 ab. Die Kontur bzw. äußere Abmessung des Schneidmessers 31 entspricht dem Verlauf oder der Kontur der Nut 16 im Siegelwerkzeugunterteil 10.

Außerhalb des Schneidmessers 11 ist ein Klemmrahmen 32 über Federglieder 33 am Siegelwerkzeugoberteil 11 aufgehängt. Der Verlauf des Klemmrahmens 32 entspricht dem Verlauf des Absatzes 18 des Siegelwerkzeugunterteils 10.

Von einer Folienrolle 34 kann die zum Verschließen der Schale 15 verwendete Deckelfolie 3 abgezogen werden. Erste und zweite Umlenkrollen 35, 36 lenken die Deckelfolie 3 so um, dass sie die Siegelstation 2 zwischen Siegelwerkzeugunterteil 10 und Siegelwerkzeugoberteil 11 in horizontaler Richtung durchläuft. Jenseits der Siegelstation 2 sorgt ein Restfolienaufwickler 37 für das Aufwickeln des Restfoliengitters der Deckelfolie 3.

Der Betrieb der Siegelstation 2 bzw. ein Ausführungsbeispiel des erfindungsgemäßen Verfahrens werden nun anhand der Figuren 2 bis 7 erläutert.

Figur 2 zeigt die Siegelstation 2 in einer geöffneten Stellung. Dabei ist eine Schale 15 im Siegelwerkzeugunterteil 10 aufgenommen. Der Rand 13 der Schale 15 wird vom Schalentragerand 12 unterstützt und getragen.

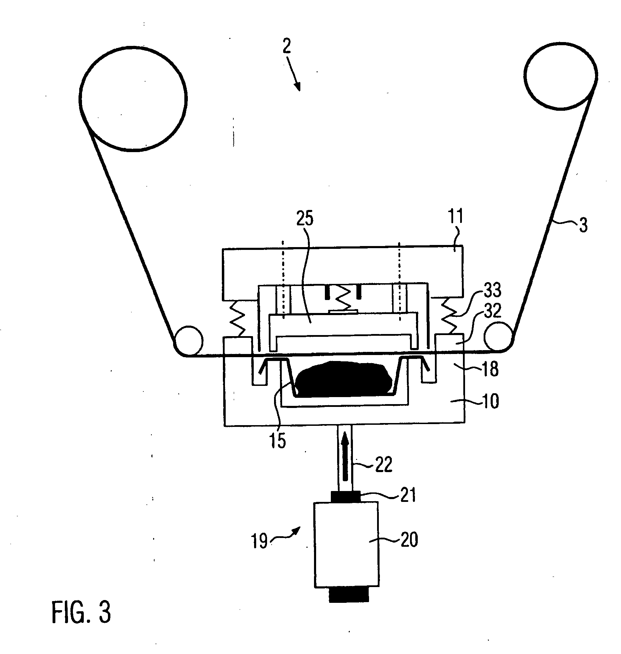

Wie in Figur 3 gezeigt, wird nun der Antrieb 19 aktiviert, um eine Hubbewegung des Siegelwerkzeugunterteils 10 zu bewirken. Zu diesem Zweck wird der Drehstrommotor 20 bestromt, um die Spindelmutter 21 zu drehen und dadurch die Spindel 22 mit dem Siegelwerkzeugunterteil 10 nach oben zu fahren. Figur 3 zeigt dabei die Situation, in der der Absatz 18 des Siegelwerkzeugunterteils 10 mit dem Klemmrahmen 32 in Kontakt gerät, um die Deckelfolie 3 zwischen dem Absatz 18 und dem Klemmrahmen 32 einzuklemmen. Zu erkennen ist, dass der Rand 13 der Schale 15 zu diesem Zeitpunkt noch nicht von der Siegelplatte 25 kontaktiert wird, da der Schalentragerand 12 niedriger liegt als der Absatz 18. Zu erkennen ist auch, dass im Gegensatz zu herkömmlichen Siegelstationen keine hermetisch geschlossene Kammer um die Schale 15 gebildet wird.

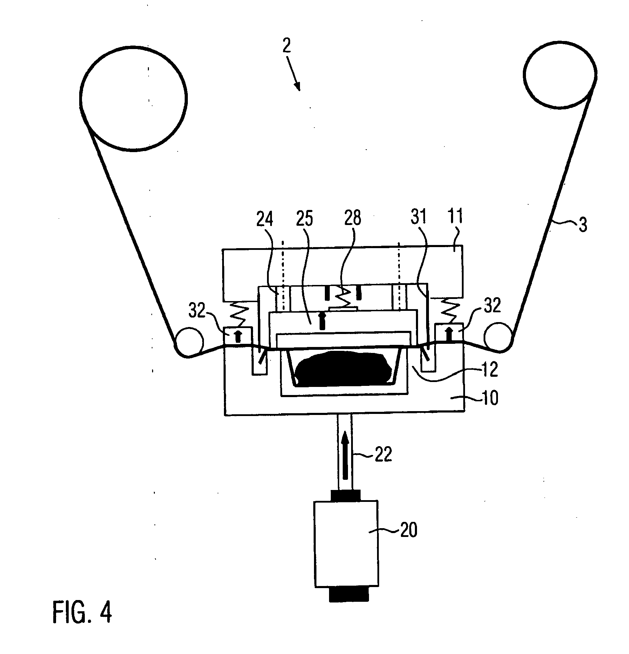

In Figur 4 zeigt der Pfeil an der Spindel 22, dass diese durch den Motor 20 noch weiter nach oben gefahren wird. Dabei wird in Figur 4 eine sogenannte "Zwischenstellung" erreicht, in der die Verpackung bzw. Schale 15 zwischen dem Schalentragerand 12 und der Siegelplatte 25 eingeklemmt wird. Ein Pfeil auf der Siegelplatte 25 deutet an, dass die Siegelplatte 25 bei der weiteren Hubbewegung des Siegelwerkzeugunterteils 10 von diesem mitgenommen und nach oben geführt wird. Dabei bewegt sich die Siegelplatte 25 entgegen der Dämpfungskraft der Dämpfungseinheit 26 entlang der Führungen 24. Pfeile am Klemmrahmen 32 deuten an, dass dieser sich - getragen vom Absatz 18 des Siegelwerkzeugunterteils 10 - dabei ebenfalls nach oben bewegt. Dies bewirkt eine Schrägstellung des nicht geklemmten Bereichs der Deckelfolie 3 zwischen dem Klemmrahmen 32 und der Siegelplatte 25. Der betreffende Bereich der Deckelfolie 3 gerät durch diese Schrägstellung in Kontakt mit dem Schneidmesser 31.

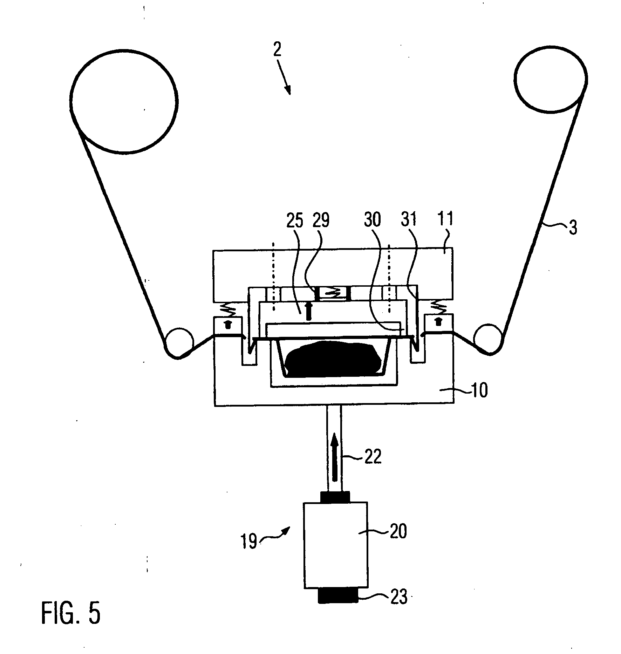

Die weitere Hubbewegung des Hubantriebs 19 bewirkt schließlich ein Durchtrennen der Deckelfolie 3 am Schneidmesser 31, wie in Figur 5 dargestellt. Zudem zeigt Figur 5, dass die Oberseite der Siegelplatte 25 den Anschlag 29 berührt. Die Siegelplatte 25 hat dabei ihre obere Endstellung erreicht, in der sie nicht weiter nach oben verfahren kann. Zusätzlich oder alternativ zum Anschlag 29 könnten auch die Elemente der Feder 28 "auf Block" liegen, d.h. in Anlage aneinander, um eine weitere Bewegung der Siegelplatte 25 nach oben zu verhindern.

Bereits seit der Zwischenstellung (siehe Figur 4) drückt das Siegelwerkzeugunterteil 10 die Deckelfolie 3 im Bereich des Schalentragerandes 12 gegen den Siegelrand 30 der Siegelplatte 25. Unter Einwirken dieses Drucks und der Wärme der Siegelränder 30 beginnt damit ab der Zwischenstellung das Versiegeln der Deckelfolie 3 mit der Schale 15. Bei Erreichen der Endstellung (Figur 5) wird, wie erläutert, eine weitere Bewegung der Siegelplatte 25 nach oben blockiert. Gleichzeitig drückt jedoch die Trägheit der Komponenten des Antriebs 19 (d.h. des Motors 20 und der Spindel 22) sowie des Siegelwerkzeugunterteils 10 weiter nach oben. Auf diese Weise wird kurzzeitig ein sehr hoher Siegeldruck erzielt. Um die Siegeldauer noch zu verlängern, kann optional die Bremse 23 aktiviert werden, um die Spindel 22 und das Siegelwerkzeugunterteil 10 in der Endstellung zu blockieren.

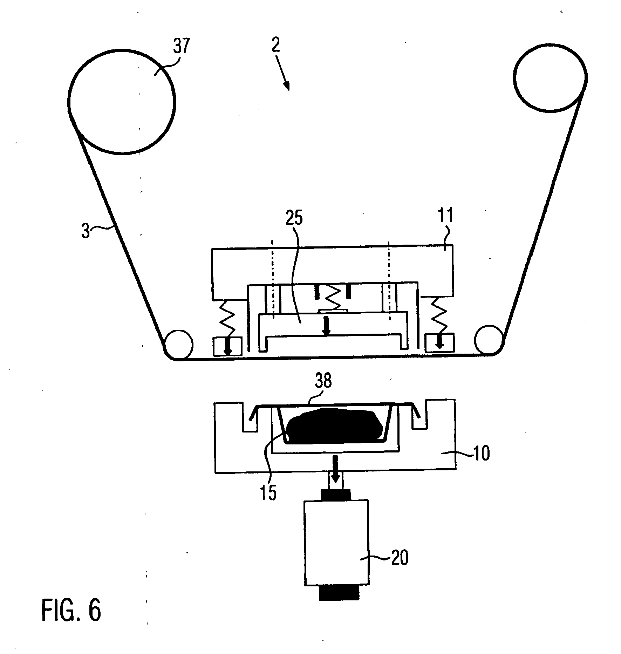

Nach dem Lösen der optional vorhandenen und auch optional eingesetzten Bremse 23 oder direkt nach dem Erreichen der oberen Endstellung gibt die Dämpfungseinheit 26 die in ihr gespeicherte potentielle Energie wieder in Form von Bewegungsenergie an die Siegelplatte 25 und das Siegelwerkzeugunterteil ab. Dies ist dargestellt in Figur 6. Die Siegelplatte 25 und das Siegelwerkzeugunterteil 10 bewegen sich folglich nach unten. Dabei zeigt Figur 6 bereits eine Stellung, in der sich Siegelwerkzeugunterteil 10 und Siegelwerkzeugoberteil 11 voneinander und von der Deckelfolie 3 gelöst haben. Durch Versiegeln der Deckelfolie 3 mit der Schale 15 ist eine luftdicht geschlossene Verpackung 38 entstanden. Der nicht mit der Schale 15 versiegelte Bereich der Deckelfolie 3 wird auf den Restfolienaufwickler 37 aufgewickelt. Die verschlossene Verpackung 38 kann aus der Siegelstation 2 heraus transportiert werden, bevor ein neuer Zyklus beginnt.

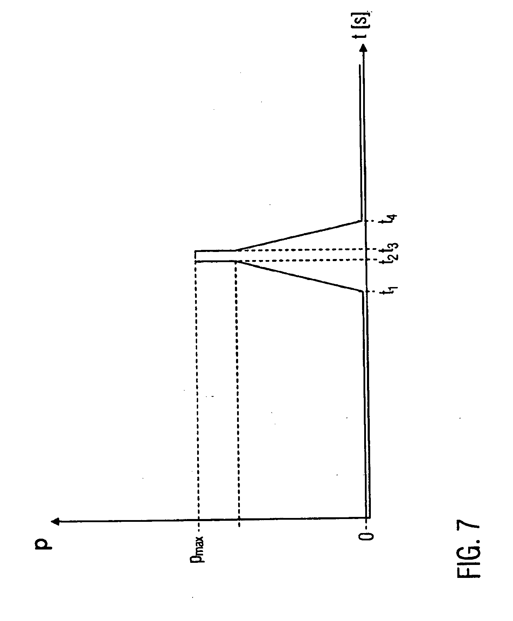

Figur 7 zeigt in einem Zeit-Druck-Diagramm schematisch den Verlauf des Siegeldrucks im erfindungsgemäßen Verfahren. Auf der x-Achse ist dabei die Zeit, auf der y-Achse der Druck dargestellt, der auf die Deckelfolie 3 wirkt.

Zunächst ist der Druck gleich Null, während das Siegelwerkzeugunterteil 10 nach oben fährt. Im Zeitpunkt t1 wird die in Figur 4 dargestellte Zwischenstellung erreicht, bei der der Schalentragerand 12 die Deckelfolie 3 zwischen sich und der Siegelplatte 25 einklemmt. Anschließend steigt der Druck auf die Deckelfolie 3 an, während dass Siegelwerkzeugunterteil 10 weiter nach oben fährt und sich die Siegelplatte 25 gegen die Dämpfungseinheit 26 bewegen muss. Zum Zeitpunkt t2 wird die in Figur 5 dargestellte Endstellung erreicht. Zu diesem Zeitpunkt kann sich die Siegelplatte 25 nicht weiter nach oben bewegen. Dennoch drücken von unten der Antrieb 19 und das Siegelwerkzeugunterteil 10 aufgrund ihrer Trägheit nach. Gerade bei einem Drehstromantrieb 20 haben die Komponenten eine vergleichsweise hohe Trägheit. Durch dieses Nachdrücken von unten steigt der Siegeldruck stark an. Folglich steigt der Siegeldruck zum Zeitpunkt t2 an, bis ein Maximalwert pₘₐₓ erreicht wird. Anschließend, nach dem Aufbrauchen der Trägheit und einer dadurch bedingten Verweildauer , bewegen sich das Siegelwerkzeugunterteil 10 und die Siegelplatte 25 nach unten, wobei sich der Siegeldruck langsam abbaut. Der Antrieb 19 unterstützt diese Bewegung zurück in die Ausgangsstellung.

Zum Zeitpunkt t4 löst sich die Siegelplatte 25 von der versiegelten Verpackung 38, sodass der Siegeldruck wieder auf Null ist. Die gesamte Siegelzeit, d.h. die minimale Dauer zwischen den Zeitpunkten t1 und t4, kann beispielsweise 100 bis 300 ms betragen. Der hohe Siegeldruck zwischen den Zeitpunkten t2 und t3 kann dabei z.B. für eine Dauer von 40 bis 70 ms erreicht werden. Falls eine Bremse 23 vorhanden ist und eingesetzt wird, kann die Dauer dieses hohen Siegeldrucks um eine Haltezeit einstellbarer Dauer verlängert werden. Der maximale Siegeldruck pₘₐₓ kann für eine bestimmte Haltezeit bis zum Zeitpunkt t3 gehalten werden, indem das Siegelwerkzeugunterteil 10 durch Aktivieren der Bremse 23 in seiner oberen Endstellung gehalten wird.

Ein wichtiger Vorteil der Erfindung liegt darin, dass die Wucht des Aufpralls des Siegelwerkzeugunterteils 10 zusammen mit der Trägheit der Komponenten des Antriebs 19 zum Erreichen einer vergleichsweise hohen Siegelkraft genutzt wird, um entsprechend die Siegelzeit verkürzen und so den Durchsatz der Siegelstation 2 bzw. der damit ausgestatteten Verpackungsmaschine 3 zu erhöhen.

## Patentansprüche

1. Verfahren zum Versiegeln von mindestens einer Verpackung (15, 38) mittels eines die Verpackung (15, 38) tragenden Siegelwerkzeugunterteils (10), eines Siegelwerkzeugoberteils (11) und einer Siegelplatte (25), wobei das Siegelwerkzeugunterteil (10) mittels eines am Siegelwerkzeugunterteil (10) angreifenden Antriebs (19) zum Durchführen einer Hubbewegung konfiguriert ist,
wobei die Hubbewegung in einer einheitlichen, ununterbrochenen Bewegung von einer abgesenkten, die Verpackung (15, 38) aufnehmenden Stellung über eine Zwischenstellung, in der ein Einklemmen der Verpackung (15, 38) zwischen dem Siegelwerkzeugunterteil (10) und der Siegelplatte (25) erfolgt, bis zu einer Endstellung erfolgt, in der das Siegelwerkzeugunterteil (10) und die Siegelplatte (25) gemeinsam mittels des Antriebs (19) gegenüber der Zwischenstellung angehoben sind, **dadurch gekennzeichnet, dass** als Antrieb (19) für das Siegelwerkzeugunterteil (10) ein Motor (20), vorzugsweise ein Asynchronmotor, mit einer integrierten Spindel (22) verwendet wird.

2. Verfahren nach Anspruch 1, **dadurch gekennzeichnet, dass** eine Dämpfungseinheit (26) die Bewegung der Siegelplatte (25) relativ zum Siegelwerkzeugoberteil (11) dämpft.

3. Verfahren nach Anspruch 2, **dadurch gekennzeichnet, dass** in der Endstellung von Siegelwerkzeugunterteil (10) und Siegelplatte (25) eine Härte der Dämpfungseinheit (26) sprunghaft ansteigt.

4. Verfahren nach einem der vorangehenden Ansprüche, **dadurch gekennzeichnet, dass** vor dem Erreichen der Zwischenstellung eine Deckelfolie (3) zwischen dem Siegelwerkzeugunterteil (10) und einem Klemmrahmen (32) eingeklemmt wird.

5. Verfahren nach einem der vorangehenden Ansprüche, **dadurch gekennzeichnet, dass** während der Hubbewegung des Siegelwerkzeugunterteils (10), insbesondere während der Bewegung von der Zwischenstellung zur Endstellung, ein Durchtrennen einer Deckelfolie (3) erfolgt.

6. Verfahren nach einem der vorangehenden Ansprüche, **dadurch gekennzeichnet, dass** eine Verriegelung und/oder eine am Antrieb (19) angreifende Bremse (23) das Siegelwerkzeugunterteil (10) temporär in seiner Endstellung hält.

7. Siegelstation (2) für eine Verpackungsmaschine (1) zum Versiegeln von mindestens einer Verpackung (15, 38), wobei die Siegelstation (2) ein eine Verpackung (15, 38) aufnehmendes Siegelwerkzeugunterteil (10), ein Siegelwerkzeugoberteil (11) und eine Siegelplatte (25) aufweist, wobei ein Antrieb (19) zum Antreiben einer Hubbewegung des Siegelwerkzeugunterteils (10) vorgesehen ist, wobei die Siegelplatte (25) über eine Dämpfungseinheit (26) am Siegelwerkzeugoberteil (11) aufgehängt ist, um in einer Siegelstellung, die Verpackung (15, 38) zwischen sich und dem Siegelwerkzeugunterteil (10) einklemmend, an der Hubbewegung des Siegelwerkzeugunterteils (10) teilnehmen zu können, **dadurch gekennzeichnet, dass** als Antrieb (19) für das Siegelwerkzeugunterteil (10) ein Motor (20), vorzugsweise ein Asynchronmotor, mit einer integrierten Spindel (22) vorhanden ist.

8. Siegelstation nach Anspruch 7, **dadurch gekennzeichnet, dass** die Dämpfungseinheit (26) dazu konfiguriert ist, dass in der Endstellung von Siegelwerkzeugunterteil (10) und Siegelplatte (25) eine Härte der Dämpfungseinheit (26) sprunghaft ansteigt.

9. Siegelstation nach einem der Ansprüche 7 oder 8, **dadurch gekennzeichnet, dass** die Dämpfungseinheit (26) ein Federelement (28), ein gummielastisches Element, einen Luftdämpfer, eine Luftfeder und/oder hydraulische Komponenten umfasst.

10. Siegelstation nach einem der Ansprüche 7 bis 9, **dadurch gekennzeichnet, dass** am Siegelwerkzeugoberteil (11) ein relativ zu diesem beweglicher Klemmrahmen (32) zum Einklemmen einer Deckelfolie (3) zwischen dem Siegelwerkzeugunterteil (10) und dem Klemmrahmen (32) vorgesehen ist.

11. Siegelstation nach Anspruch 10, **dadurch gekennzeichnet, dass** der Klemmrahmen (32) elastisch am Siegelwerkzeugoberteil (11) gelagert ist.

12. Siegelstation nach einem der Ansprüche 7 bis 11, **dadurch gekennzeichnet, dass** eine Führung (24) zum Führen der Bewegung der Siegelplatte (25) relativ zum Siegelwerkzeugoberteil (11) vorgesehen ist.

13. Siegelstation nach einem der Ansprüche 7 bis 1-2, **dadurch gekennzeichnet, dass** ein Schneidmesser (31) zum Durchtrennen einer Deckelfolie (3) am Siegelwerkzeugunterteil (10) oder am Siegelwerkzeugoberteil (11) befestigt ist, insbesondere starr befestigt ist.

14. Siegelstation nach einem der Ansprüche 7 bis 13, **dadurch gekennzeichnet, dass** ein Anschlag (29) zum Festlegen der Endstellung der Siegelplatte (25) vorgesehen ist.

15. Siegelstation nach einem der Ansprüche 7 bis 14, **dadurch gekennzeichnet, dass** eine Verriegelung zum Verriegeln des Siegelwerkzeugunterteils (10) in seiner Endstellung und/oder eine am Antrieb (19) angreifende Bremse (23) vorgesehen ist.

16. Verpackungsmaschine (1) mit einer Siegelstation (25) nach einem der Ansprüche 7 bis 15.

## Claims

1. A method for sealing at least a packaging unit (15, 38) by means of a sealing tool lower part (10) carrying said packaging unit (15, 38), a sealing tool upper part (11), and a sealing plate (25), wherein said sealing tool lower part (10) is, by a drive (19) acting upon said sealing tool lower part (10), configured to perform a lifting movement, wherein said lifting movement is performed in a uniform, continuous motion from a lowered position receiving said packaging unit (15, 38), via an intermediate position in which said packaging unit (15, 38) is clamped between said sealing tool lower part (10) and said sealing plate (25), to a final position in which said sealing tool lower part (10) and said sealing plate (25) are jointly lifted in relation to said intermediate position by said drive (19),
**characterized in that** a motor (20), preferably an asynchronous motor, with an integrated spindle (22) is used as said drive (19) for said sealing tool lower part (10).

2. Method according to claim 1, **characterized in that** a damping unit (26) dampens the movement of said sealing plate (25) relative to said sealing plate upper part (11).

3. Method according to claim 2, **characterized in that** in the final position of said sealing tool lower part (10) and said sealing plate (25), a hardness of said damping unit (26) increases sharply.

4. Method according to one of the preceding claims, **characterized in that**, prior to reaching said intermediate position, a top film (3) is clamped between said sealing tool lower part (10) and a clamping frame (32).

5. Method according to one of the preceding claims, **characterized in that** during the lifting movement of said sealing tool lower part (10), in particular during the movement from said intermediate position to said final position, a top film (3) is severed.

6. Method according to one of the preceding claims, **characterized in that** a lock and / or a stop or a brake (23) acting upon said drive (19) temporarily holds said sealing tool lower part (10) in its final position.

7. A sealing station (2) for a packaging machine (1) for sealing at least a packaging unit (15, 38), where said sealing station (2) comprises a sealing tool lower part (10) receiving a packaging unit (15, 38), a sealing tool upper part (11), and a sealing plate (25), wherein a drive (19) is provided for actuating a lifting movement of said sealing tool lower part (10), wherein said sealing plate (25) is suspended via a damping unit (26) at said sealing tool upper part (11) in order to be able, in a sealing position, to participate in the lifting movement of said sealing tool lower part (10) while clamping said packaging unit (15, 38) between itself and said sealing tool lower part (10),
**characterized in that** a motor (20), preferably an asynchronous motor, with an integrated spindle (22) is provided as said drive (19) for said sealing tool lower part (10).

8. Sealing station according to claim 7, **characterized in that** said damping unit (26) being designed such that a hardness of said damping unit (25) increases sharply in said final position of said sealing tool lower part (26) and said sealing plate (10).

9. Sealing station according to one of the claims 7 or 8, **characterized in that** said damping unit (26) comprises a spring element (28), a rubber-elastic element, an air damper, an air spring and / or hydraulic components.

10. Sealing station according to one of the claims 7 to 9, **characterized in that** a clamping frame (32) moveable relative to said sealing tool upper part (11) is provided at the latter for clamping a top film (3) between said sealing tool lower part (10) and said clamping frame (32).

11. Sealing station according to claim 10, **characterized in that** said clamping frame (32) is elastically supported at said sealing tool upper part (11).

12. Sealing station according to one of the claims 7 to 11, **characterized in that** a guide (24) is provided for guiding the movement of said sealing plate (25) relative to said sealing tool upper part (11).

13. Sealing station according to one of the claims 7 to 12, **characterized in that** a cutting knife (31) for severing a top film (3) is attached, in particular rigidly fixed at said sealing tool lower part (10) or at said sealing tool upper part (11).

14. Sealing station according to one of the claims 7 to 13, **characterized in that** a stop (29) is provided for determining said final position of said sealing plate (25).

15. Sealing station according to one of the claims 7 to 14, **characterized in that** a lock for locking said sealing tool lower part (10) in its final position and / or a brake (23) acting upon said drive (19) is provided.

16. Packaging machine (1) with a complete cutting station (25) according to one of the claims 7 to 15.

## Revendications

1. Procédé de scellage d'au moins un emballage (15, 38) au moyen d'une partie inférieure d'outil de scellage (10) supportant l'emballage (15, 38), d'une partie supérieure d'outil de scellage (11) et d'une plaque de scellage (25), procédé
d'après lequel la partie inférieure d'outil de scellage (10) est configurée pour effectuer un mouvement de levage au moyen d'un organe d'entraînement (19) agissant sur la partie inférieure d'outil de scellage (10), et
d'après lequel le mouvement de levage s'effectue selon un mouvement uniforme, ininterrompu, à partir d'une position abaissée pour la réception de l'emballage (15, 38), en passant par une position intermédiaire dans laquelle se produit un serrage de l'emballage (15, 38) entre la partie inférieure d'outil de scellage (10) et la plaque de scellage (25), jusqu'à une position finale dans laquelle la partie inférieure d'outil de scellage (10) et la plaque de scellage (25) sont soulevées en commun, au moyen de l'organe d'entraînement (19), par rapport à la position intermédiaire,
**caractérisé en ce que** l'on utilise, en guise d'organe d'entraînement (19) pour la partie inférieure d'outil de scellage (10), un moteur (20), de préférence un moteur asynchrone, avec une vis (22) intégrée.

2. Procédé selon la revendication 1, **caractérisé en ce qu'**une unité d'amortissement (26) amortit le mouvement de la plaque de scellage (25) par rapport à la partie supérieure d'outil de scellage (11).

3. Procédé selon la revendication 2, **caractérisé en ce que** dans la position finale de la partie inférieure d'outil de scellage (10) et de la plaque de scellage (25), une dureté de l'unité d'amortissement (26) augmente de manière brusque.

4. Procédé selon l'une des revendications précédentes, **caractérisé en ce qu'**avant d'atteindre la position intermédiaire, une feuille de couvercle (3) est enserrée entre la partie inférieure d'outil de scellage (10) et un cadre de serrage (32).

5. Procédé selon l'une des revendications précédentes, **caractérisé en ce que** pendant le mouvement de soulèvement de la partie inférieure d'outil de scellage (10), notamment pendant le mouvement de déplacement de la position intermédiaire à la position finale, s'effectue un sectionnement de la feuille de couvercle (3).

6. Procédé selon l'une des revendications précédentes, **caractérisé en ce qu'**un verrouillage et/ou un frein (23) agissant sur l'organe d'entraînement (19), maintient la partie inférieure d'outil de scellage (10), temporairement, dans sa position finale.

7. Poste de scellage (2) pour une machine d'emballage (1), destiné à sceller au moins un emballage (15, 38), le poste de scellage (2) comprenant une partie inférieure d'outil de scellage (10) recevant un emballage (15, 38), une partie supérieure d'outil de scellage (11) et une plaque de scellage (25), poste de scellage
dans lequel il est prévu un organe d'entraînement (19) pour entraîner un mouvement de levage de la partie inférieure d'outil de scellage (10),
et dans lequel la plaque de scellage (25) est suspendue à la partie supérieure d'outil de scellage (11), par l'intermédiaire d'une unité d'amortissement (26), pour pouvoir, dans une position de scellage, en enserrant entre elle et la partie inférieure d'outil de scellage (10) l'emballage (15, 38), participer au mouvement de levage de la partie inférieure d'outil de scellage (10),
**caractérisé en ce qu'**en guise d'organe d'entraînement (19) pour la partie inférieure d'outil de scellage (10), il est prévu un moteur (20), de préférence un moteur asynchrone, avec une vis (22) intégrée.

8. Poste de scellage selon la revendication 7, **caractérisé en ce que** l'unité d'amortissement (26) est configurée de manière à ce que dans la position finale de la partie inférieure d'outil de scellage (10) et de la plaque de scellage (25), une dureté de l'unité d'amortissement (26) augmente de manière brusque.

9. Poste de scellage selon l'une des revendications 7 ou 8, **caractérisé en ce que** l'unité d'amortissement (26) comprend un élément de ressort (28), un élément à élasticité de caoutchouc, un amortisseur pneumatique, un ressort pneumatique et/ou des composants hydrauliques.

10. Poste de scellage selon l'une des revendications 7 à 9, **caractérisé en ce que** sur la partie supérieure d'outil de scellage (11) est prévu un cadre de serrage (32) mobile par rapport à celle-ci, pour enserrer une feuille de couvercle (3) entre la partie inférieure d'outil de scellage (10) et le cadre de serrage (32).

11. Poste de scellage selon la revendication 10, **caractérisé en ce que** le cadre de serrage (32) est monté de manière élastique sur la partie supérieure d'outil de scellage (11).

12. Poste de scellage selon l'une des revendications 7 à 11, **caractérisé en ce qu'**il est prévu un guidage (24) pour guider le mouvement de déplacement de la plaque de scellage (25) par rapport à la partie supérieure d'outil de scellage (11).

13. Poste de scellage selon l'une des revendications 7 à 12, **caractérisé en ce qu'**une lame de coupe (31) pour sectionner une feuille de couvercle (3), est fixée, de préférence fixée de manière rigide, sur la partie inférieure d'outil de scellage (10) ou la partie supérieure d'outil de scellage (11).

14. Poste de scellage selon l'une des revendications 7 à 13, **caractérisé en ce qu'**il est prévu une butée (29) pour définir la position finale de la plaque de scellage (25).

15. Poste de scellage selon l'une des revendications 7 à 14, **caractérisé en ce qu'**il est prévu un verrouillage pour verrouiller la partie inférieure d'outil de scellage (10) dans sa position finale, et/ou un frein (23) agissant sur l'organe d'entraînement (19).

16. Machine d'emballage (1) comprenant un poste de scellage (2) selon l'une des revendications 7 à 15.
